# EUROPÄISCHE PATENTSCHRIFT

(11) **EP 1 857 387 B1**
(45) Veröffentlichungstag und Bekanntmachung des Hinweises auf die Patenterteilung: **30.03.2011**
(21) Anmeldenummer: 07002285.0
(22) Anmeldetag: 02.02.2007
(51) Int. Cl.: B65G 69/28

(54) **Stationäre Überladebrücke**
Stationary overload bridge
Pont de transbordement stationnaire

(30) Priorität: 20.05.2006 DE 102006023781
(43) Veröffentlichungstag der Anmeldung: 21.11.2007
(73) Patentinhaber: CAEMA Verladesysteme GmbH, 34471 Volksmarsen (DE)
(72) Erfinder: Kloppenburg Hans-Josef, 34471 Volkmarsen (DE); Hahn Norbert, Franklin, Wi 53132 (US)
(74) Vertreter: Walther, Walther & Hinz GbR

(56) Entgegenhaltungen:
- FR-A- 1 260 741
- FR-A- 2 453 806
- FR-A- 2 470 076
- GB-A- 1 212 112
- US-A1- 2004 117 927

## Beschreibung

Die vorliegende Erfindung betrifft eine stationäre Überladebrücke gemäß dem Oberbegriff des Anspruches 1.

Stationäre Überladebrücken werden von Fahrzeugen, in der Regel von Gabelstaplern, befahren, um die Ware zu dem an der Überladebrücke wartenden LKW zu bringen. Damit dieses Fahrzeug in einfacher Weise auf die Ladefläche des LKW gelangen kann, ist die Ladebrücke höhenverstellbar. Dies bewirkt jedoch, dass am Übergang zwischen der eigentlichen Rampe und der Ladebrücke ein Spalt und gegebenenfalls eine überstehende Kante auftreten kann, welche beim Überfahren des Spaltes einen unangenehmen Stoß auf das Fahrzeug und dessen Fahrer ausübt. Um die Gesundheit des Fahrers zu schonen und die Beanspruchung des Fahrzeugs zu mindern, wird nun angestrebt, diesen Spalt und diese Kante so zu gestalten, dass der dabei auftretende Stoß auf ein Minimum reduziert wird.

Zur Lösung dieses Problems ist in der EP 1 544 139 A1 vorgeschlagen worden, zwischen der eigentlichen Rampe und der beweglichen Ladebrücke ein weiteres, in diesem Fall kreisförmig gekrümmtes Blech vorzusehen, welche den Spalt zumindest teilsweise verschließt und somit für einen sanfteren Übergang sorgt. In einer anderen Ausführungsform der Überladebrücke gemäß EP 1 544 139 A1 ist das Blech einstückig an die Ladebrücke angeformt und an ihrer der Rampe zugewandten Seite in einem Winkel von 90° Grad abgekantet. Der dabei verbleibende Spalt verändert seine Größe je nach Stellung der Ladebrücke, so dass beim Überfahren des Spaltes in manchen Situationen noch ein unangenehmer Stoß auf den Fahrer des Fahrzeuges einwirkt. Außerdem ist eine solche Konstruktion vergleichsweise teuer in der Herstellung.

Aus dem DE 202 10 291 U1 und aus der DE 43 19 309 C1 sind Überladebrücken für Rampen bekannt, bei denen die Ladebrücke eine zur Rampe hin überstehende Ladebrückenplatte ausweist, unter der unmittelbar darunter ein horizontales Drehgelenk angeordnet ist. Dabei reicht die Ladebrückenplatte bis über das Drehgelenk und liegt mit ihrem über die Ladebrücke überstehenden Teil auf dem Drehgelenk auf. Zwischen der Ladebrückenplatte und der Rampe verbleibt ein Spalt, so dass die Ladebrücke verschwenkt werden kann, ohne dass die Ladebrückenplatte an der Rampe an anstößt. Fährt der Gabelstapler nun über diesen Spalt, so erzeugt dies einen unangenehmen Stoß auf den Fahrer und das Fahrzeug, welches nach neuesten Vorschriften nicht mehr zulässig ist.

Aus der FR 1 260 741 und der FR 2 470 076 sind Überladebrücken bekannt, bei denen zwischen der Ladebrücke und der Rampe ein horizontal ausgerichtetes Drehgelenk vorgesehen ist. Dabei reicht eine auf der Rampe vorgesehene Rampenplatte und eine auf der Ladebrücke vorgesehene Ladebrückenplatte bis über das Gelenk, so dass über dem Gelenk ein entsprechender Spalt verbleibt. Beim Verschwenken der Ladebrückenplatte wird dieser Spalt derart vergrößert, dass der Gabelstaplerfahrer beim Überfahren dieses Spaltes einen spürbaren Stoß erhält.

Davon ausgehend liegt der vorliegenden Erfindung die Aufgabe zu Grunde, eine Überladebrücke der eingangs genannten Art zu schaffen, mit der der auf das überfahrende Fahrzeug ausgeübte Stoß auf ein Minimum reduziert wird und welche kostengünstig herstellbar ist.

Als technische Lösung dieser Aufgabe wird erfindungsgemäß eine stationäre Überladebrücke mit den Merkmalen des Anspruches 1 vorgeschlagen. Vorteilhafte Weiterbildungen dieser Überladebrücke sind den jeweiligen Unteransprüchen zu entnehmen.

Eine nach dieser technischen Lehre ausgebildete Überladebrücke hat den Vorteil, dass durch die Anordnung des Spaltes über der Mitte des Drehgelenkes gleichzeitig erreicht wird, dass weder die Rahmenplatte, noch die Ladebrückenplatte über die Mitte des Drehgelenkes hinaus reicht. Gleichzeitig endet die Ladebrückenplatte genau in einer vertikalen und durch die Drehachse verlaufenden Ebene, so dass beim Verschwenken der Ladebrücke das Ende der Ladebrückenplatte nur einen minimalen vertikalen Weg zurücklegt. Hierdurch verändert sich der Spalt auf ein Minimum nur minimal und gleichzeitig wird dieses Ziel sehr kostengünstig erreicht, da keine zusätzlichen Bauteile oder andere komplizierte Konstruktionen benötigt werden.

Weitere Vorteile der erfindungsgemäßen Überladebrücke ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1a - 1c: eine geschnitten dargestellte Seitenansicht einer Ausführungsform einer nicht erfindungsgemäßen Überladebrücke in verschiedenen Positionen;
- Fig. 2a - 2c: eine geschnitten dargestellte Seitenansicht einer Ausführungsform einer erfindungsgemäßen Überladebrücke in verschiedenen Positionen.

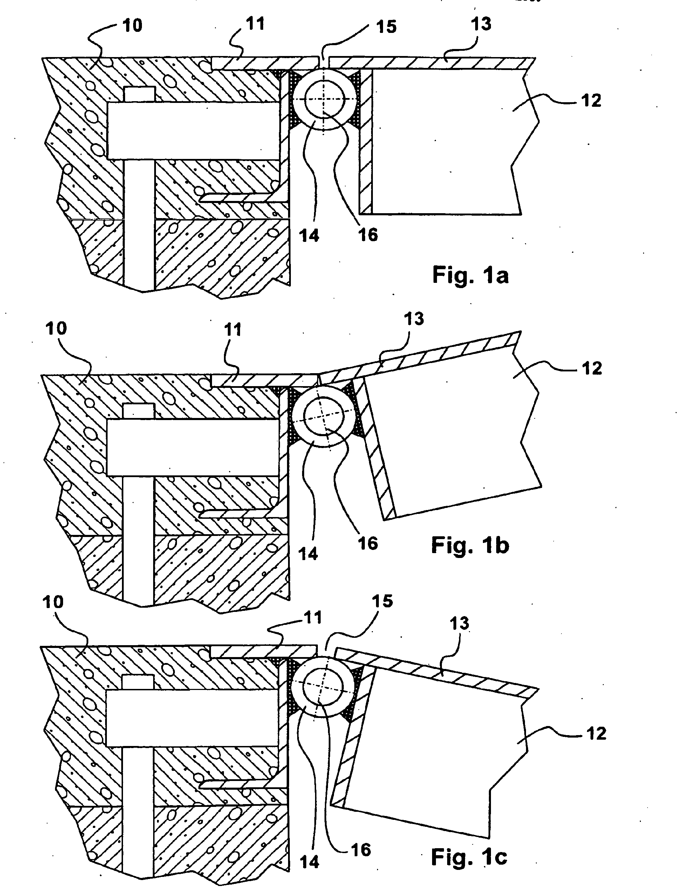

In den Figuren 1a bis 1c ist eine Ausführungsform einer nicht erfindungsgemäßen stationären Überladebrücke dargestellt, welche eine Rampe 10 und eine an der Oberseite und an der Kante der Rampe 10 angebrachte Rampenplatte 11 und eine Ladebrücke 12 und eine an der Oberseite der Ladebrücke 12 angebrachte Ladebrückenplatte 13 umfasst. Dabei wird die Ladebrücke 12 über ein Drehgelenk 14 schwenkbar an der Rampe 10 gehalten.

Die Rampenplatte 11 ist in unmittelbarer Nachbarschaft zur Ladebrückenplatte 13 angeordnet und durch einen Spalt 15 von dieser beabstandet. Dabei reichen die Rampenplatte 11 und die Ladebrückenplatte 13 so weit über das Drehgelenk 14 herüber, dass der Spalt 15 mittig, also über der Drehachse des Drehgelenkes 14, angeordnet ist.

In der Fig. 1b ist die Ladebrücke 12 um 12,5° Grad nach oben verschwenkt. Hierdurch verringert sich der Spalt 15 auf ein Minimum, wobei durch die Anordnung der Rampenplatte 11 und der Ladebrückenplatte 13 nun ein Kontakt der beiden entsteht, so dass der Spalt 15 überbrückt ist. In diesem Zustand kann das die Überladebrücke überfahrende Fahrzeug stoßfrei auf die Ladebrücke fahren.

In Fig. 1c ist die Ladebrücke 12 um 12,5° Grad nach unten verschwenkt. Hierdurch vergrößert sich der Spalt 15 auf ein Maximum. Durch die Anordnung der Rampenplatte 11 bis über das Drehgelenk 14 und durch die Ausgestaltung der Ladebrückenplatte 13 bis über das Drehgelenk 14 wird hierdurch erreicht, dass der Spalt 15 nicht übermäßig groß wird, auch wenn er in diesem Zustand sein Maximum erreicht. Überfährt das Fahrzeug nun die Überladebrücke, so erfährt das Fahrzeug und der dazugehörige Fahrer zwar einen gewissen Stoß durch den Spalt 15, dieser jedoch ist derart minimiert, dass gesundheitliche Beeinträchtigungen des Fahrers oder ein Verschleiß am Fahrzeug nicht zu erwarten sind.

In der in den Fig. 1a bis 1c dargestellten Ausführungsform ist der Spalt 15 so angeordnet, dass dieser mittig über dem Drehgelenk 14 liegt. Das heißt, eine virtuelle Mittellinie des Spaltes 15 liegt in der gleichen Ebene wie eine Drehachse 16 des Drehgelenkes 14.

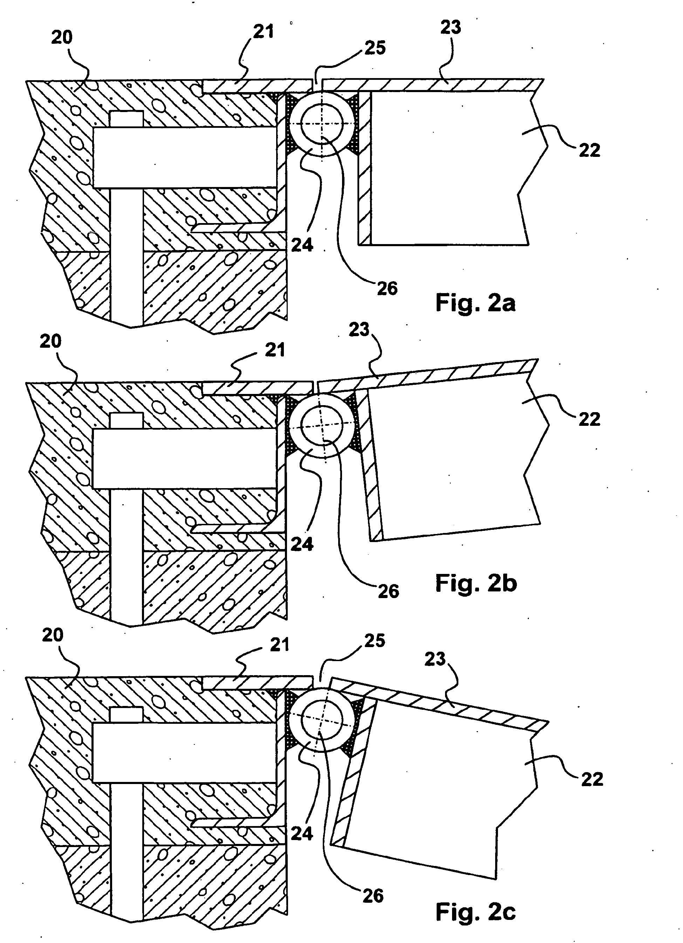

Die in den Fig. 2a bis 2c dargestellte Ausführungsform einer erfindungsgemäßen stationären Überladebrücke unterscheidet sich von der in den Fig. 1a bis 1c dargestellten, Ausführungsform lediglich dadurch, dass der durch die Rahmenplatte 21 und die Ladebrückenplatte 23 gebildete Spalt 25 nun nicht mehr mittig über dem Drehgelenk 24 liegt, sondern dass die Ladebrückenplatte 23 mit ihrer äußersten Kante über der Drehachse 26 des Drehgelenkes 24 liegt, so dass der Spalt 25 neben der Drehachse 16 angeordnet ist.

Wie den Fig. 2b und 2c zu entnehmen ist, wird der Spalt 25 beim Verschwenken der Ladebrücke 22 nach oben auf ein Minimum verkleinert und beim Verschwenken der Ladebrücke 22 nach unten auf ein Maximum vergrößert. Dennoch bleibt der Spalt 25 auch bei diesen Extremstellungen so klein, dass der dadurch verursachte Stoß auf das darüber fahrende Fahrzeug und dessen Fahrzeug auf ein Minimum reduziert bleibt.

Es versteht sich, dass in einer anderen, hier nicht dargestellten Ausführungsform der Spalt auch anders über dem Drehgelenk angeordnet werden kann, so lange der Spalt über der Drehachse des Drehgelenkes angeordnet ist bzw. so lange entweder die äußere Kante der Rampenplatte oder die äußere Kante der Ladebrückenplatte über der Drehachse des Drehgelenkes liegen.

Bei handelsüblichen stationären Überladebrücken hat sich herausgestellt, dass der Spalt zwischen 8 mm und 15 mm, vorzugsweise 11 mm, breit sein muss, damit die Schwenkbewegung der Ladebrücke realisiert werden kann. Bei anderen Überladebrücken kann der Spalt andere Maße annehmen.

In einer anderen, hier nicht dargestellten Ausführungsform ist die dem Spalt zugewandte Kante der Rampenplatte und/oder der Ladebrückenplatte angeschrägt ausgebildet, um das Überfahren des Spaltes noch sanfter zu gestalten.

## Patentansprüche

1. Stationäre Überladebrücke mit einer Rampe (20) und mit einer über ein horizontal ausgerichtetes Drehgelenk (24) an der Rampe (20) schwenkbar gehaltenen Ladebrücke (22), wobei die Ladebrücke (22) eine als befahrbare Fläche ausgebildete Ladebrückenplatte (23) aufweist, wobei an der Rampe (20) eine als befahrbare Fläche ausgebildete Rampenplatte (21) vorgesehen ist und wobei das Drehgelenk (24) unmittelbar unterhalb der Ladebrückenplatte (23) und/oder der Rampenplatte (21) angeordnet ist und an diese heranreicht, wobei die Rampenplatte (21) bis über das Drehgelenk (24) reicht und wobei die Ladebrückenplatte (23) ebenfalls bis über das Drehgelenk (24) reicht, so dass ein zwischen der Rampenplatte (21) und der Ladebrückenplatte (23) ausgebildeter Spalt (25) über dem Drehgelenkes (24) angeordnet ist,
**dadurch gekennzeichnet,**
**dass** die Ladebrückenplatte (23) mit ihrer äußersten Kante in einer vertikalen Ebene über der Drehachse (26) des Drehgelenks (24) liegt.

2. Überladebrücke nach einem der vorangehenden Ansprüche,
**dadurch gekennzeichnet,**
**dass** der Spalt (25) zwischen 8 mm und 15 mm, vorzugsweise 11 mm breit ist.

3. Überladebrücke nach einem der vorangehenden Ansprüche,
**dadurch gekennzeichnet,**
**dass** die Rampenplatte (21) und/oder die Ladebrückenplatte (23) am Drehgelenk (24) zur Anlage kommt.

## Claims

1. A stationary dock leveler with a ramp (20) and with a loading bridge (22) being held pivotably on the ramp (20) via a horizontally aligned pivot joint (24) with the loading bridge (22) presenting a loading bridge plate (23) formed as a drivable surface with a ramp plate (21) being provided on the ramp (20) as a drivable surface, and with the pivot joint (24) being located directly below the loading bridge plate (23) and/or the ramp plate (21) and extending up to same, with the ramp plate (21) extending beyond the pivot joint (24) and with the loading bridge plate (23) likewise extending beyond the pivot joint (24) so that a gap formed between the ramp plate (21) and the loading bridge plate (23) is located above the pivot joint (24),
**characterized**
**in that** the loading bridge plate (23) with its outermost edge is located in a vertical plane above the axis of rotation (26) of the pivot joint (24)

2. A dock leveler according to any one of the preceding claims,
**characterized**
**in that** the gap (25) has a width varying between 8 mm and 15 mm, preferably 11 mm.

3. A dock leveler according to any one of the preceding claims,
**characterized**
**in that** the ramp plate (21) and/or the loading bridge plate (23) bears on the pivot joint (24).

## Revendications

1. Pont de transbordement stationnaire avec une rampe (20) et avec un pont de chargement (22) porté articulé à la rampe à travers un joint articulé (24) orienté horizontalement, le pont de chargement (22) présentant un panneau de pont de chargement (23) formé en tant que surface carrossable, un panneau de rampe (21) étant prévu à la rampe (20) en tant que surface carrossable, et le joint articulé (24) étant agencé immédiatement au-dessous du panneau de pont de chargement (23) et/ou du panneau de rampe (21) et le confinant, le panneau de rampe (21) s'élevant jusqu'au-delà le joint articulé (24) et le panneau de pont de chargement (23) s'élevant également jusqu'au-delà le joint articulé (24) de manière qu'une fente (25) formée entre le panneau de rampe (21) et le panneau de pont de chargement (23) est agencée au-dessus du joint articulé (24),
**caractérisé**
**en ce que** le panneau de pont de chargement (23) est situé avec son bord extrême dans un plan vertical au-dessus de l'axe de rotation (26) du joint articulé (24).

2. Pont de transbordement selon l'une quelconque des revendications précédentes,
**caractérisé**
**en ce que** la fente (25) a une largeur entre 8 mm et 15 mm, préférablement 11 mm.

3. Pont de transbordement selon l'une quelconque des revendications précédentes,
**caractérisé**
**en ce que** le panneau de rampe (21) et/ou le panneau de pont de chargement (23) est adjacent au joint articulé (24).
